# EUROPEAN PATENT SPECIFICATION

(11) **EP 2 530 296 B1**
(45) Date of publication and mention of the grant of the patent: **12.10.2016**
(21) Application number: 12170218.7
(22) Date of filing: 31.05.2012
(51) Int. Cl.: F02N 11/08, B60W 10/06, B60W 10/192, B60W 30/192, B60W 10/188, B60W 10/30

(54) **Idling stop system**
Leerlaufstoppsystem
Système d'arrêt de ralenti

(30) Priority: 01.06.2011 JP 2011123691; 01.06.2011 JP 2011123606
(43) Date of publication of application: 05.12.2012
(73) Proprietor: Honda Motor Co., Ltd., Tokyo 107-8556 (JP)
(72) Inventor: WATANABE, Tomohiro, Saitama, 351-0193 (JP)
(74) Representative: Weickmann & Weickmann PartmbB

(56) References cited:
- EP-A1- 2 138 712
- DE-A1-102007 029 479
- DE-A1-102007 030 540
- DE-A1-102007 062 955
- DE-A1-102008 054 885
- DE-A1-102008 061 790

## Description

### [Technical Field]

The present invention relates to an idling stop system for a vehicle having an idling stop function when the vehicle stops traveling.

### [Background Art]

DE 10 2008 061 790 A discloses an idling stop system for stopping and restarting a motor in a traveling stop state of a vehicle, comprising a braking control unit for performing a braking force holding control for at least temporarily holding a brake force generated by operation of a brake pedal; and a motor control unit for re-starting the motor which is stopping when a predetermined re-start condition is established during the operation of the brake pedal.

DE 20 2007 030 540 A discloses to reduce the power consumption of an air conditioning blower if the engine is switched off.

Conventionally, in ECUs (Electronic Control Unit) represented by VSA (registered trade mark: Vehicle Stability Assist), when a power supply voltage drops, for example, a battery output voltage in which a rated voltage is 12V becomes equal to or smaller than 10V, a failure diagnostic for CAN (Controller Area Network) for preventing an erroneous detection is stopped.

Incidentally, there is a vehicle of which engine is stopped to save fuel when the vehicle stops traveling, i.e., a vehicle with idling stop for increasing a fuel consumption.

However, in the vehicle with the idling stop function, there is a mixture of ECUs in which voltage drop occurs and ECUs in which the voltage drop does not occur when a voltage drop occurs during engine-automatic returning while a starter motor is driven depending on the presence and absence of an auxiliary power supply (DC/DC converter).

In the vehicle control ECUs represented by VSA (registered trade mark: Vehicle Stability Assist), the supplied power supply voltage decreases when the engine is started with a starter motor from idling stop. In addition, "VSA" is another name of ESC (Electric Stability Control) which is control provided by combining ABS (Antilock Brake System) for maintaining a braking force in which a lock of wheels is prevented, TCS (Traction Control System) for preventing spin out of the wheels, and a yaw control for detecting spin.

In this case, because a power supply voltage will decrease when general control of the vehicle control ECU is performed, alarm is generated with an indicator, or it is determined that a voltage error occurs to stop the control.

For example, when the rated power source voltage is 12 V, the output voltage of the power source voltage decreases under 10 V, vehicle control functions such as hill start assist for preventing start back during hill starting are immediately stopped.

This is because there occur functions cannot be controlled during a low voltage when the output voltage of the power source is equal to or smaller than 10 V. Accordingly, all control functions (the ABS, the VSA, the hill start assist, etc.) are evenly stopped.

### [Prior Art Document]

### [Patent Document]

[Patent Document 1] JP 04-71740 A.

### [Summary of Invention]

### [Problems to be Solved by Invention]

Accordingly, when the failure diagnosis for CAN communication, etc., is stopped, an erroneous detection may occur in communication with other ECUs in the current situation.

As a solving means, there is a technology disclosed in Patent Document 1. However, the technology is restrictively performed only during ABS control by pumping-braking to suppress locking of wheels. In addition, to prevent the erroneous detection during a low power supply voltage of batteries of the vehicle, a circuit configuration of a single ABS-ECU is reviewed, but does not aim to prevent erroneous detection in poor communication with other ECUs.

As described above, in the vehicle having the idling stop function, there is a problem that the hill start assist cannot be performed because decrease in the power supply voltage supplied to a brake ECU as a vehicle control ECU occurs during the engine automatically return.

On the other hand, in the vehicle with the idling stop, when a electric power is supplied from another power source to the brake ECU which is a calculating part, calculation is possible during engine start. However, because an additional electric power source is used, this may be a cause increasing a manufacturing cost.

As a solving means, there is a technology of Patent Document 1. However, in the technology is restrictively performed only during the ABS control. In addition, the circuit configuration has been reviewed to prevent erroneous detections during a low power source voltage, and is not a technology aiming to perform control normally even in a low power supply voltage.

The present invention is developed in consideration of the above-described situations, and aims to provide an idling stop system which can perform re-start of the engine smoothly by suppressing the erroneous operation of the various types of ECUs upon engine re-start from idling stopping.

In addition, the present invention aims to provide an idling stop system which can perform the hill start assist smoothly during the re-start of the engine from the idling stop with low manufacturing cost.

### [Means for solving problems]

To achieve the object described above, the present invention provides an idling stop system of claim 1

According to claim 1, the re-start of the engine is smoothly performed because an electric power consumption is reduced for the engine control unit prior the re-start of the engine.

In the idling stop system of claim 2, regarding, the idling stop system as claimed in claim 1, the consumed electric power decreasing means temporarily stops supplying an electric power or a diagnosis for at least one of vehicle control devices other than the motor control unit and the braking control unit.

According to claim 2, it is prevented to release a brake force maintaining and perform an error determination during general braking force maintaining. Accordingly even if a capacity of a backup power source is set to be small, the braking force is surely kept.

In the idling stop system of claim 1, the consumed electric power decreasing means decreases a minimum limit voltage that is a condition for performing the braking force holding control regarding the voltage which is supplied to be applied to an actuator regarding the braking control unit.

According to claim 1, because the low limit voltage can be decreased even if the supply voltage decreases during the engine automatic returning, a necessary control can be smoothly performed even when the supplied voltage decreases.

In the idling stop system of claim 3 regarding the idling stop system of claim 1 or 2, the motor control unit transmits a re-start notice signal to the bake control unit and the vehicle control device prior to the re-stait of the motor as well as an automatic return completion signal to the braking control unit and the vehicle control device after completion of the automatic return upon the re-starting.

The braking control unit decreases the minimum limit voltage which is a condition for performing the braking force holding control regarding the voltage which is supplied to be applied to an actuator regarding the braking control unit with the consumed power decreasing means when receiving the re-start notice signal.

At least one of vehicle control devices suppresses control of the actuator or the sensor regarding at least one of the vehicle control devices when receiving the re-start notice signal.

The braking control unit and the vehicle control device returns to a general control mode when receiving the automatic return completion signal.

According to claim 3, it is prevented that a control performance becomes insufficient, because the braking control unit decreases the minimum limit voltage which is a condition for performing the braking force holding control regarding the voltage which is supplied to be applied to an actuator regarding the braking control unit when receiving the re-start notice signal. In addition, the control for the actuator or the sensor of the vehicle control device is suppressed, so that an erroneous detection is prevented, and power consumption can be suppressed.

In addition, operation conditions of the braking control unit or the vehicle control device are returned to the general level after the motor becomes in a general operation state, so that surer braking force control and error detection become able to be performed.

In the idling stop system of claim 4, regarding the idling stop system of claim 1 or 2, the braking control unit decreases the minimum limit voltage which is the condition for performing the braking force holding control regarding the voltage supplied to be applied to the actuator regarding the braking control unit and simultaneously restricts control modes which can be performed.

According to claim 4, restricting modes controllable in the braking control unit in addition to the other devices enables decrease in the consumed electric power of the braking control unit and a surer performing the braking force holding.

The idling stop system of claim 5, regarding the idling stop system of claim 1 or 2, further comprises power supply state monitoring means for monitoring a voltage status of a power supply of the vehicle, wherein when determining whether a possibility that the braking force holding by the braking control unit becomes impossible from the voltage status, the stopping and re-starting of the motor is inhibited.

According to claim 5, it is prevented that the vehicle moves in a motor stop sate by performing the braking force holding in imperfect state.

The idling stop system of claim 6, regarding the idling stop system of claim 2, further comprises:
a motor circumference state determining means for determining a circumference state of the motor; and
consumed power decreasing degree changing means for changing the consumed power decreasing degree of at least one of the vehicle control devices on the basis of the circumference state determined by the motor circumference state determining means.

According to claim 6, it is suppressed to stop necessary function in accordance with the circumference state because a voltage drop is predicted on the basis of the circumference states such as the ambient temperature and an oil temperature to selectively drive operating devices, i.e., the devices are divided into devices of which diagnosis is stopped and devices of which operations are continuously stopped.

In the idling stop system of claim 7, regarding the idling stop system as claimed in claim 1 or 2, the motor control unit transmits, prior to the re-start of the motor, a re-start notice signal to the braking control unit as well as a start completion signal to the braking control unit after completion of the re-start.

The braking control unit decreases the minimum limit voltage which is the condition for performing the braking force holding control regarding the voltage which is supplied to be applied to the actuator regarding the braking control unit with the consumed electric power decreasing means when receiving the re-start notice signal. The control for decreasing the minimum limit voltage of the consumed electric power decreasing means is terminated when receiving the start completion signal.

According to the idling stop system of claim 7, it is possible to surer perform the error detection or the barking force control by retuning the operation condition of the braking control unit to the general level after the motor becomes in the general operation state. In addition, it is prevented that the control performance becomes insufficient by decreasing the minimum limit voltage which is the condition for performing the braking force holding control regarding the voltage which is supplied to be applied to the actuator regarding the braking control unit with the consumed electric power decreasing means.

In the idling stop system of claim 8, regarding the idling stop system as claimed in claim 1 or 2, the braking control unit decreases the minimum limit voltage which is the condition for performing the braking force holding control regarding the voltage supplied to be applied to the actuator regarding the braking control unit with the consumed electric power decreasing means, and simultaneously restricts control modes which can be performed.

According to the idling stop system of claim 8, the control modes which can be performed are restricted, so that consumed power in the brake control unit is decreased to provide a surer braking force holding.

The idling stop system of claim 9, regarding the idling stop system as claimed in claim 1, or 2 further comprises:
a motor circumference state determining means for determining a circumference state of the motor; and
moderating degree changing means for changing the minimum limit voltage on the basis of the circumference state determined by the motor circumference state determining means.

According to the idling stop system of claim 9, a voltage drop is predicted on the basis of the circumference state of the motor such as the ambient temperature or the oil temperature of the motor to change the minimum limit voltage, particularly at a low temperature, so that it can be previously prevented that a trouble occurs in controlling.

### [Advantageous Effect]

According to the present invention, erroneous operations in various types of ECUs are suppressed to the re-start of the engine from idling stop in a vehicle having the idling stop, so that re-start of the engine can be smoothly performed.

In addition, the hill start assist can be smoothly performed from the idling stop to the re-start of the engine without inviting a cost increase.

### [Brief description of drawings]

Fig. 1 is a conception perspective view illustrating configuration of the vehicle brake according to the embodiments of the present invention.
Fig. 2 is a block diagram illustrating a brake control system of the idling stop in the vehicle according to the embodiments.
Fig. 3A is a side view illustrating a starting operation under the hill start assist in a case where a vehicle climbing on a slope stop on the way of the slope.
Fig. 3B is a view illustrating states of a caliper hydraulic pressure, an accelerator opening angle, etc. in a process of hill start assist.
Fig. 4 illustrates a general configuration of a first system of a hydraulic circuit of a hydraulic pressure control device according to the embodiments.
Fig. 5 is a view illustrating with thick lines an operation status of hydraulic pressure in the first system of the hydraulic pressure control device according to the embodiment when a driver presses a brake pedal.
Fig. 6 is a view illustrating with thick lines an operation status of hydraulic pressure in the first system of the hydraulic pressure control device according to the embodiment when a driver changes a pressing operation on an accelerator pedal from a brake pedal.
Fig. 7 is a block diagram illustrating an outline of a control system for the whole of the vehicle including the brake control system according to the first embodiment.
Fig. 8 is a time chart illustrating elements of the idling stop control for the vehicle according to the first embodiment.
Fig. 9 is a flowchart of the idling stop control for the vehicle according to the first embodiment.
Fig. 10 is a time chart illustrating elements of the idling stop control with the hill start assist control for the vehicle according to a second embodiment.
Fig. 11 is a flowchart of the idling stop control with the hill start assist control for the vehicles according to the second embodiment.
Fig. 12 is a time chart illustrating elements including a voltage decrease quantity in the hill start assist control during the idling stop of the vehicle according to the second embodiment.
Fig. 13 is an illustration illustrating a relation between a voltage applied to a regulator valve of the hydraulic pressure control device operating the brake according to the second embodiment and the caliper hydraulic pressure which the regulator valve can maintain.

### [Modes for carrying out Invention]

Hereinafter, with reference to drawings will be described embodiments of the present invention.

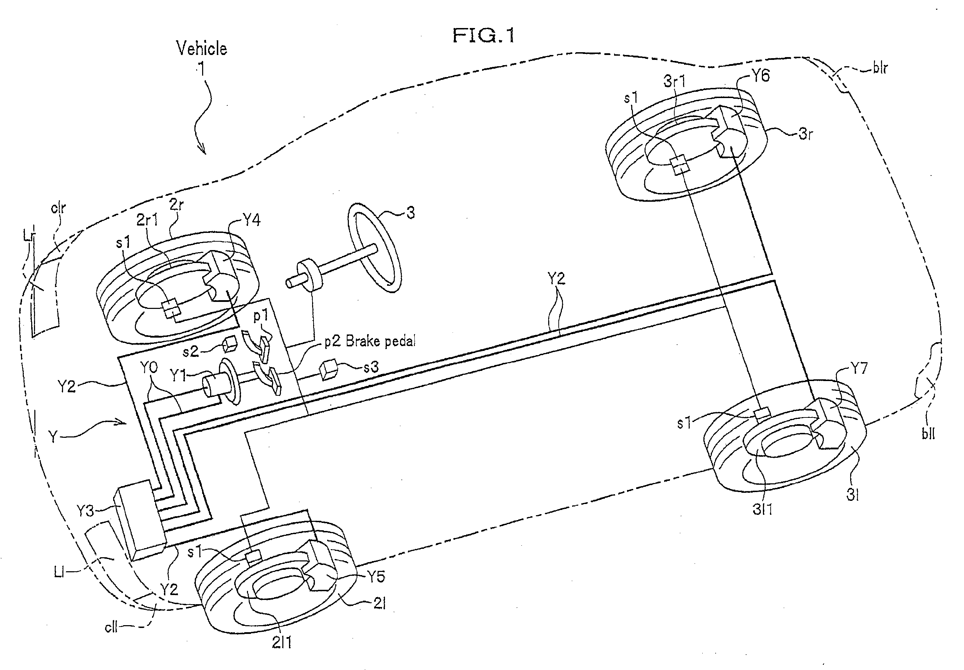

Fig. 1 is a conception-like perspective view illustrating a brake configuration of a vehicle 1 according to the embodiments of the present invention.

The vehicle 1 according to the embodiments such as four-wheel vehicle has an idling stop function for stopping an engine 4 when the vehicle 1 stops traveling due to traffic-light stopping or traffic jam.

The vehicle 1 includes at a front part of thereof a right front wheel 2r and a left front wheel 21 which serve as driving wheels and turning wheels for changing a traveling direction and at a rear part of the vehicle 1, a right rear wheel 3r and a left rear wheel 31.

Wheel speed sensors s1 of a noncontact type for detecting rotation of the wheels (2r, 21, 3r, 31) are respectively installed adjacent to the right and left front wheel 2r, 21 and right and left rear wheels 3r, 31. The vehicle 1 can obtain a speed of the vehicle 1 from detection information of each wheel speed sensor s1.

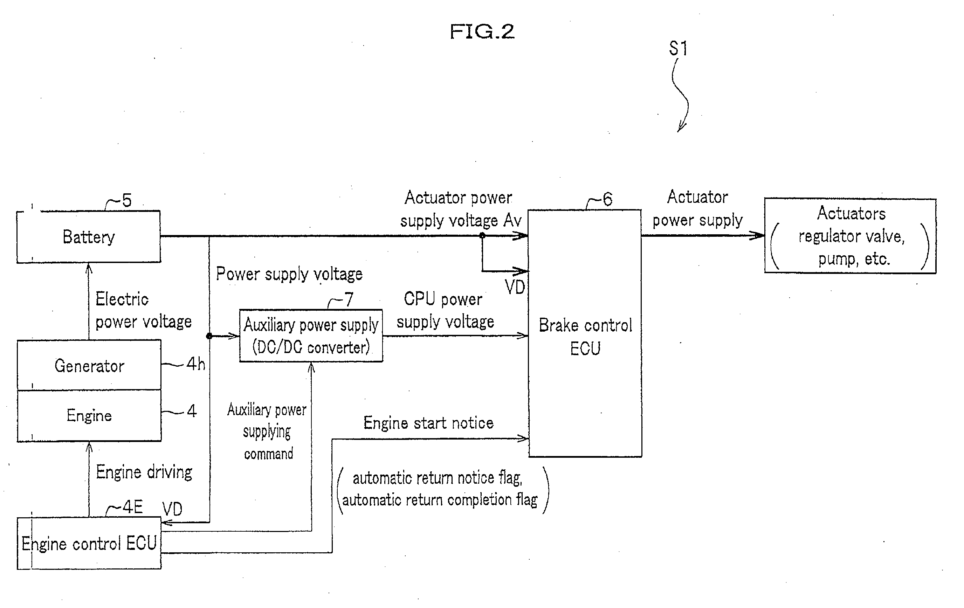

An engine 4 (see Fig. 2) is installed at the front part of the vehicle 1. The engine 4 supplies a drive force to the right front wheel 2r and the left front wheel 21 through a drive force transmitting device such as a transmission and a differential gear device (not shown).

Wheel speed sensors s1 of a noncontact type for detecting rotation of wheels (2r, 2l, 3r, 31), using detection of change in magnetic field, are respectively installed adjacent to the right and left front wheel 2r, 21 and right and left rear wheels 3r, 31. The vehicle 1 can obtain a speed of the vehicle 1 from detection information of each wheel speed sensor s1.

The engine 4 (see Fig. 2) is installed at the front part of the vehicle 1. The engine 4 supplies a drive force to the right front wheel 2r and the left front wheel 21 through a drive force transmitting device such as a transmission and a differential gear device (not shown).

The right and left front wheels 2r, 21 are turned through a steering shaft, etc., by rotation of a steering wheel 3 by a driver (not shown) in an interior of the vehicle 1.

Adjacent to feet of the driver sitting on in the vehicle 1, an accelerator pedal p1 is installed for increasing a rotational speed of the engine 4. Adjacent to the accelerator p1, an accelerator opening degree sensor (accelerator stroke sensor) s2 for detecting a pressing stroke (operation) quantity of the accelerator pedal p1 is installed.

In addition, adjacent to the feet of the driver, a brake pedal p2 is installed for breaking the right and left front wheels 2r, 21 and the right and left rear wheels 3r, 31 adjoining the accelerator pedal p1.

Inside the vehicle 1, a hydraulic braking device Y for applying a braking force to the right and left front wheels 2r, 21 and the right and left rear wheels 3r, 31 with a brake hydraulic pressure by that the driver presses (operates) the brake pedal p2.

The hydraulic braking device Y includes: a master cylinder Y1 to which the operation quantity of the brake pedal p2 by the driver is transmitted as the brake hydraulic pressure, a check (non-return) valve, described later, connected to the master cylinder Y1 with hoses or pipes, a hydraulic unit Y3 in which hydraulic devices such as a regulator valves are installed, and wheel cylinders Y4, Y5, Y6, Y7 to which a hydraulic pressure from the master cylinder Y1 is controlled with the hydraulic unit Y3 and supplied through the hydraulic pipe Y2.

The wheel cylinders Y4, Y5, Y6, Y7 supply a braking force to respective brakes 2r1, 211, 3r1, 311 from the brake hydraulic pressure transmitted from a hydraulic pipe Y2 to brake the right front wheel 2r the left front wheel 21 and the right rear wheel 3r the left rear wheel 31.

Fig. 2 is a block diagram illustrating an engine and brake control system S1 of the idling stop for the vehicle 1. In Fig. 2, control systems other than that for the idling stop of the vehicle 1 are omitted.

The vehicle 1 includes, as the engine and brake control system S1 for performing control regarding the idling stop, an engine control ECU (Electronic Control Unit) 4E for controlling the engine 4 and a brake control ECU 6 for controlling the brakes 2r1, 211, 3r1, 311 of the right and left front wheels 2r, 21 and the right and left rear wheels 3r 31 by the hydraulic braking device Y.

The vehicle 1 includes a battery 5 for starting the engine 4 or supplying a power supply voltage to actuators such as a regulator valve v1, described later, for the hydraulic unit Y3, etc., the engine control ECU 4E, and a brake control ECU 6.

To the brake control ECU 6, the supply power for operating the actuators and a supply power for operating CPU are supplied.

More specifically, as the supply power for operating the CPU a predetermined voltage is supplied to the brake control ECU 6 through an auxiliary power supply 7 such as DC/DC converter. The auxiliary power supply 7 is operated in response to an auxiliary supply power supplying command from the engine control ECU 4E.

In addition, an actuator power supply voltage Av applied to actuators (pump p, regulator valve v1, etc.) of the hydraulic brake device, described later, is supplied to the brake control ECU 6 from the battery 5.

The engine control ECU 4E performs calculation for control (process) at startup of the engine 4, a quantity of fuel injection, an ignition timing and transmits output signals to various types of actuators such as a starting device for starting the engine with a starting motor (not shown), a fuel supplying device for supplying a fuel, an ignition device for igniting a mixture gas with spark at predetermined timing in accordance with the calculation.

The engine and brake control system S1 needs an electric power for starting the engine 4 with the starting device, supplying fuel with the fuel supplying device, and igniting with the igniting device.

Accordingly, the battery 5 earlier described and a generator 4h having a rotor connected to a crank shaft of the engine 4 are installed. An electric power generated with the generator 4h is stored in the battery 5.

Will be described the hill start assist control installed in the vehicle 1.

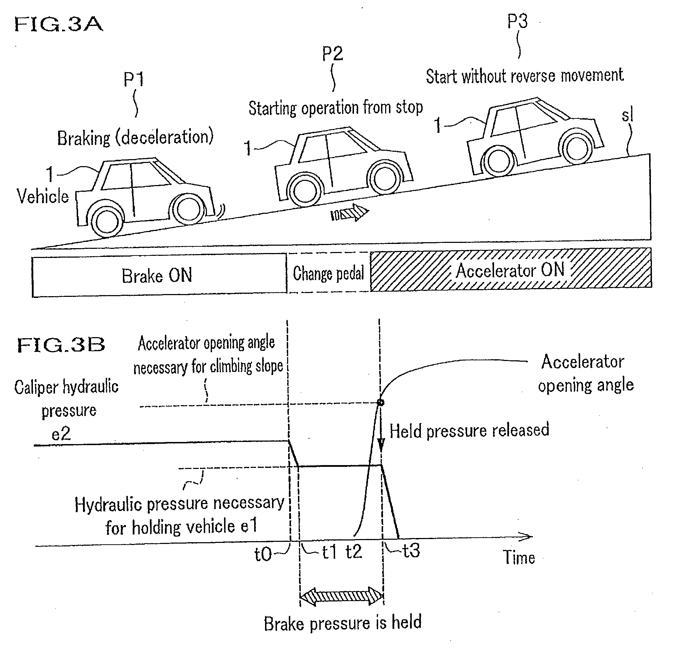

Fig. 3A is a side view illustrating a starting operation under the hill start assist in a case where a vehicle climbing on a slope stops on the way of the slope. Fig. 3B illustrates states of the caliper hydraulic pressure and an accelerator opening angle in a process of the hill start assist control.

The hill start assist control is a control for the vehicle 1 to be able to start in a front direction without rearward movement of the vehicle 1 when a driver changes pressing from the brake pedal p2 to the accelerator pedal p1 to start the vehicle by a driver when the vehicle 1 is stopped in response to pressing a brake pedal by the driver while the vehicle 1 is climbing a slope s1. At a position P1, the vehicle 1 is in a status in which a driver presses a brake pedal p2 for decelerate the vehicle 1. A position P2 shows a change of the pedal from a state in which the brake pedal p2 is continuously pressed by the driver to the accelerator pedal p1.

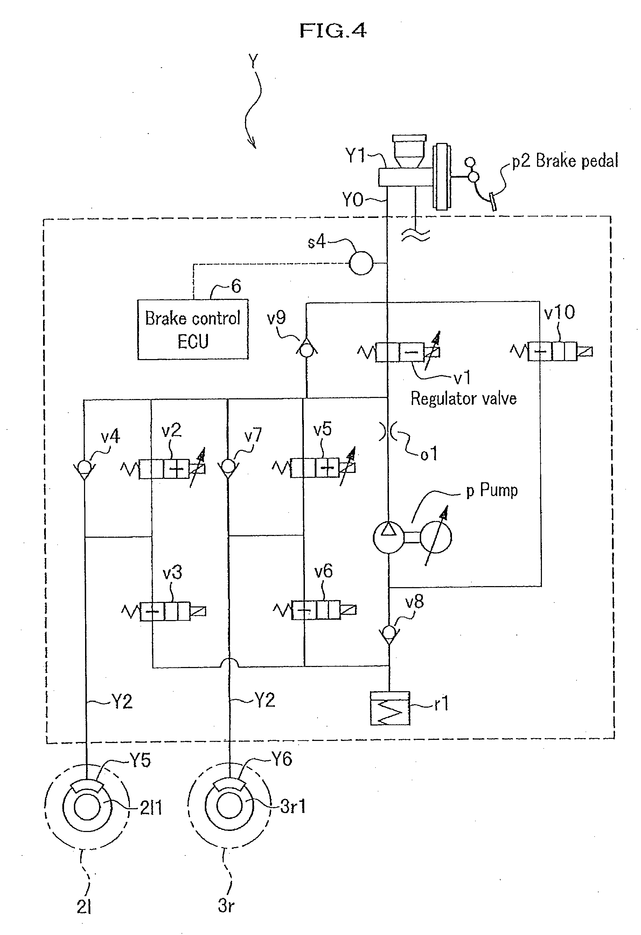

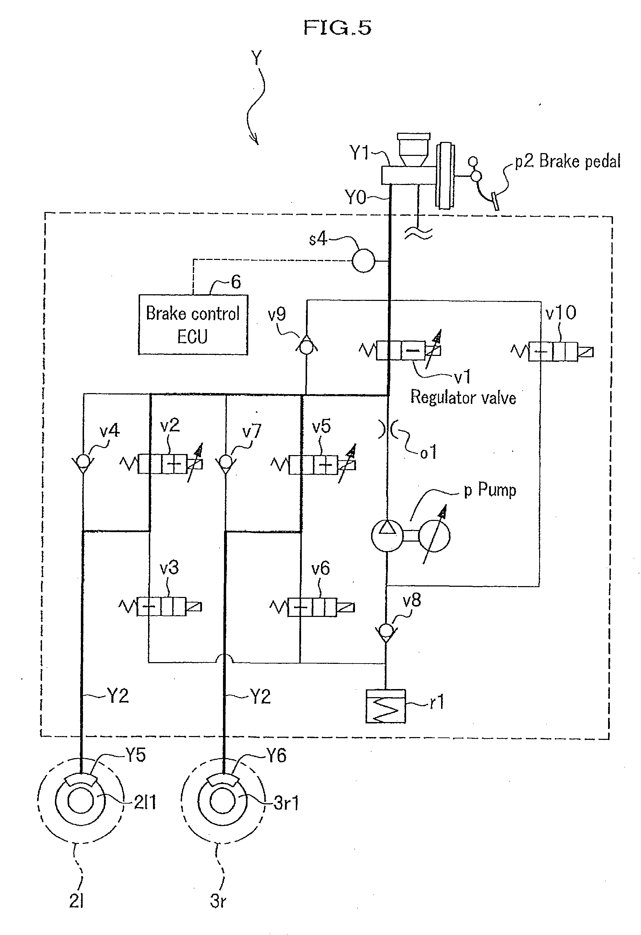

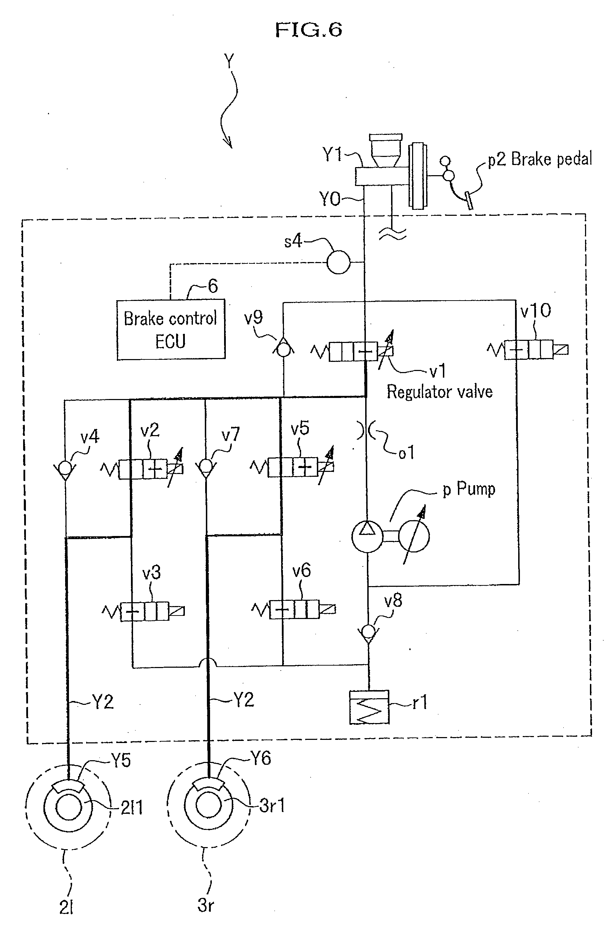

Figs. 4, 5, and 6 illustrate general configurations of a first system of a hydraulic pressure control device according to the embodiments. Fig. 4 illustrates a drawing illustrating the first system of the hydraulic pressure circuit. Fig. 5 illustrates an operation status of the hydraulic pressure of the first system of the hydraulic pressure control device Y when the driver presses the brake pedal p2. Fig. 6 illustrates an operation status of the hydraulic pressure of the first system of the hydraulic pressure control device Y for the hill start assist control when the driver changes the pressed brake pedal to the accelerator pedal p1 from the brake pedal p2 with the thick lines.

The hydraulic pressure control device Y has two systems, i.e., the first system in which the brake 211 of the left front wheel 21 and the brake 3r1 of the right rear wheel 3r are operated in response to transmission of the hydraulic pressure from the master cylinder Y1 and a second system in which the brake 2r1 of the right front wheel 2r and the brake 311 of the left rear wheel 31 are operated in response to application of the hydraulic pressure from the master cylinder Y1.

Here because the first and second systems have the substantially same configuration, only the first system will be described, but a description of the second system will be omitted. In other words, the second system is not illustrated in Figs. 4 to 6.

As shown in Fig. 4, the wheel cylinder Y5 is installed at the brake 211 of the left front wheel 21 where the operation quantity of the brake pedal p2 is converted into a brake hydraulic pressure in the wheel cylinder Y5 which brakes the left front wheel 21.

Similarly, the wheel cylinder Y6 is installed at the brake 3r1 of the right rear wheel 3r, where the operation quantity of the brake pedal p2 is converted into a brake hydraulic pressure of the wheel cylinder Y6 to brake the right rear wheel 3r.

Downstream of the master cylinder Y1 where the pressing operation of the brake pedal p2 by the driver is converted into the brake hydraulic pressure (caliper hydraulics pressure), a regulator valve v1 is installed for maintaining the brake hydraulic pressure of the brake 211 of the left front wheel 21 and a brake hydraulic pressure of the brake 3r1 of the right rear wheel 3r at time when the hill start assist control is performed. The regulator valve v1 is a valve of a normal open type which closes only when the closing command is outputted from the brake control ECU 6.

In the vicinity of the master cylinder Y1, a master pressure sensor s4 is installed for detecting a brake hydraulic pressure. A detection signal as a result of the detection of the brake hydraulic pressure of the master cylinder Y1 is transmitted to the brake control ECU 6 through the CAN (Controller Area Network).

A first in-valve v2 of a normally open type is installed between the regulator valve v1 and the wheel cylinder Y5 installed at the brake 211 of the left front wheel 21. The first in-valve v2 closes only when a closing command is outputted from the brake control ECU 6.

In parallel to the in-valve v2, a first check valve v4 is installed for preventing the brake fluid from flowing into the wheel cylinder Y5 of the left front wheel 21.

In addition, a first out-valve v3 of a normally closed type is installed for maintaining and releasing the brake hydraulic pressure to the wheel cylinder Y5 of the left front wheel 21. The first out-valve v3 is generally closed, and opens only when an opening command is outputted by the brake control ECU 6, for example, when the left front wheel 21 is rocked.

Similarly, between the regulator valve v1 and a wheel cylinder Y6 installed at the brake 3r1 of the right rear wheel 3r, a second in-valve v5 of a normally open type is installed. The second valve v5 closes only when a closing command is outputted by the brake control ECU 6.

In parallel to the second in-valve v5, a second check valve v7 for stopping the brake fluid flowing into the wheel cylinder Y6 of the brake 3r1 of the right rear wheel 3r is installed.

In addition, a second out-valve v6 of a normally closed type is installed for maintaining and releasing the brake hydraulic pressure to the wheel cylinder Y6 of the right rear wheel 3r. The second out-valve v6 is generally closed, and opens only when an opening command is outputted by the brake control ECU 6, for example, when the right rear wheel 3r is locked.

Downstream of the first out-valve v3 for the left front wheel 21 and the second out-valve v6 for the right rear wheel 3r, a reserver r1 is installed and performs a function for releasing the hydraulic pressure when the first and second out-valves v3 and v6 are opened.

Between the regulator valve v1 and the reserver r1, a pump p and a third check valve v8 are installed.

The pump p soaks the brake fluid stored in the reserver r1 and discharges the brake fluid to a side of an orifice o1 to recover the brake hydraulic pressure decreased by absorption of the brake fluid by the reserver rl. The orifice o1 attenuates a pulsation in the brake hydraulic pressure.

The third check valve v8 allows the brake fluid to flow from the reserver r1 to the pump p, on the other hand, stops a reverse flow from the pump p to the reserver r1.

A fourth check valve v9 is installed in parallel to the regulator valve v1 and allows the brake fluid to flow from the master cylinder Y1 to the wheel cylinders Y5, Y6, on the other hand, stops a reverse flow from the wheel cylinders Y5, Y6 to the master cylinder Y1. The fourth check valve v9 prevents the brake hydraulic pressures of the wheel cylinders Y5, Y6 from releasing when the regulator valve v1 is closed during the hill start assist control.

A relief valve v10 is normally closed type and generally closes to prevent the brake hydraulic pressure (caliper hydraulic pressure) from escaping and the brake fluid from flowing with bypassing the pump p during operation of the pump p. The relief valve v10 opens only when the opening command is outputted by the brake control ECU 6 to release the brake hydraulic pressure (caliper hydraulic pressure).

Next, will be described an operation of the hill start assist control of the hydraulic braking device Y.

Because the driver does not press the brake pedal p2 during general traveling, as shown in Fig. 4, the brake hydraulic pressure of the brake fluid in the hydraulic pipe Y0 and a hydraulic pipe Y2 of the hydraulic braking device Y is low, so that a braking force is not applied to the brakes 2r1 211, 3r1, 311 from the wheel cylinders Y4, Y5, Y6, Y7.

As shown in Fig. 3A, when the driver presses the brake pedal while the vehicle 1 is climbing a slope s1, as shown by a thick line in Fig. 5, the brake hydraulic pressure is applied from the master cylinder Y1 to the wheel cylinder Y5 through the regulator valve v1 of the normally open type and the first in-valve v2 of the normally open type, so that the left front wheel 21 is braked by the brake 211.

At the same time, as shown by the thick lines in Fig. 5, the hydraulic pressure is applied from the master cylinder Y1 to the wheel cylinder Y6 through the regulator valve v1 of the normally open type and the second in-valve v5 of the normally open type, so that the right rear wheel 3r is braked by the brake 3r1.

At the same time, the right front wheel 2r and the left rear wheel 31 are braked by similar operations as the left front wheel 21, and the right rear wheel 3r.

In this instance, because the driver presses the brake pedal p2, the vehicle 1 stops by braking in an initial phase at the positions P1 to P2 shown in Fig. 3A. Accordingly, as shown in Fig. 3B, the caliper hydraulic pressure (brake hydraulic pressure) detected by the master pressure sensor s4 has a larger caliper hydraulic pressure e2 than the hydraulic pressure e1 for maintaining the vehicle 1 in a stop status on the slope s1.

When the deriver changes the pedal being pressed from the brake pedal p2 to the accelerator pedal p1 to cause the vehicle 1 to start traveling at the position P2 shown in Fig. 3A (time t0 to t2 in Fig. 3B), the brake hydraulic pressure in the master cylinder Y1 which has been held by the pressing force on the brake pedal p2 begins to decrease and change in such a decreasing direction that the caliper hydraulic pressure (brake hydraulic pressure) e2 detected by the master pressure sensor s4 under the hydraulic pressure e1 capable to stop and keep the position of the vehicle 1 on the slope s1. Accordingly, if this state continues, the vehicle 1 begins to move rearward on the slope s1. Then, the brake control ECU 6 starts the hill start assist control. This explanation is that for operation in a status in which the idling stop is not performed.

The hill start assist control determines the hydraulic pressure at a start of the hill start assist control (the hydraulic pressure e1 for stopping and keeping the position on the slope sl) with a preset map in accordance with acceleration in forward-rearward direction of the vehicle 1 measured by a forward-rearward G sensor s3 (see Fig. 1).

Next, when the caliper hydraulic pressure e2 shown in Fig. 3B detected with the master pressure sensor s4 decreases to the hydraulic pressure e1, the brake control ECU 6 transmits a closing signal (drive current) to the regulator valve v1 to close the regulator valve v1 to hold the hydraulic pressure applied to the wheel cylinders Y5, Y6 at the e1 as shown by the thick lines in Fig. 6. In this operation, if the caliper hydraulic pressure (brake hydraulic pressure) is insufficient for the e1, if necessary, the caliper hydraulic pressure is kept at the e1 by operation of the pump p.

At time t2 in Fig. 3B, the driver begins to press the accelerator pedal p1, when the accelerator opening angle measured by the accelerator opening angle sensor s2 (see Fig. 1) reaches an accelerator opening angle required to climb the slope s1 (time t3 in Fig. 3B), the brake control ECU 6 transmits the opening signal to the regulator valve v1 to open the regulator valve v1 to release the held hydraulic pressure.

As described above, as shown in Fig. 4, the caliper hydraulic pressure applied to the wheel cylinders Y4 to Y7 is decreased to release braking the right and left front wheels 2r, 21 and the right and left rear wheels 3r, 31, and the hill start assist control is stopped.

The outline of the hill start assist control is as described above. In addition, when the actuator power supply voltage Av applied by the battery as shown in Fig. 2 becomes equal to or lower than a preset predetermined voltage, a diagnosis is performed to determine not performing the hill start assist control by stopping transmitting the closing signal (drive current) to the regulator valve v1, and stopping operating the pump p, etc.

For example, when the voltage condition V0 described later is smaller than 10 V, a restriction of control (voltage condition) is applied to the hill start assist control to stop the function of the hill start assist control.

### «First Embodiment»

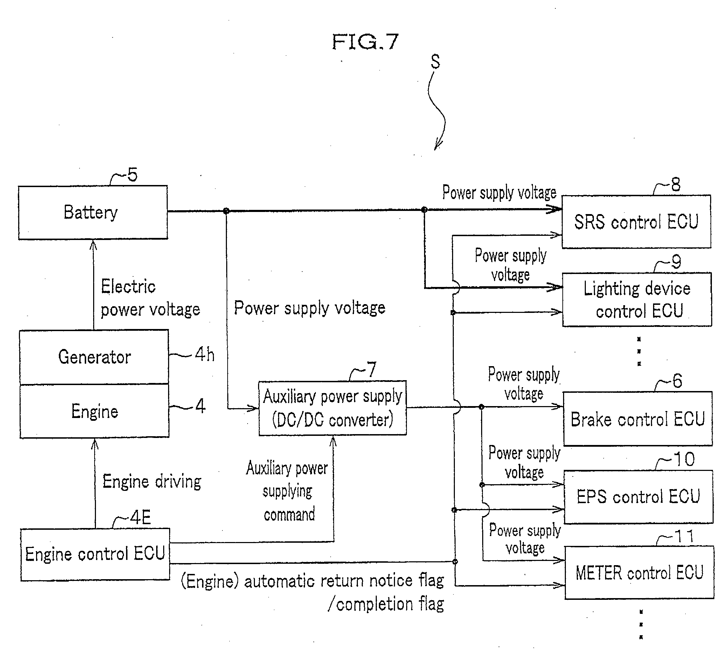

Fig. 7 is a block diagram illustrating an outline of a control system S including the engine and brake control system S1 of the vehicle 1 according to the first embodiment.

The control system S according to the first embodiment includes the following configuration including the engine and brake control system S1 described above.

There are ECUs directly supplied with electric power from the battery 5 such as SRS (Supplemental Restraint System) control ECU 8 for controlling an airbag to protect a passenger in case of collision and a lighting device control ECU 9 for controlling lighting in the vehicle 1.

Upon collision, the SRS control ECU 8 controls acceleration by absorbing kinetic energy in the collision and increase stiffness by expanding an airbag to protect a passenger. The SRS control ECU 8 inputs detection signals from the sensors s3, such as the forward-rearward G sensor s3, a lateral G sensor (not shown), a roll angle sensor for detecting roll (rotation) of the vehicle 1, and a passenger detecting sensor of a load detection method or a pressure detecting method for detecting the presence/absence and weight of passengers.

The lighting device control ECU 9 is an ECU for controlling lighting device for inside and outside of the vehicle 1 such as head lamps (main lamps) Lr, L1 disposed at a head end portion of the vehicle 1, cornering lights c1r, c1l, brake lamps b1r, bll disposed at a rear end portion, and a room lamp (not shown).

On the other hand, in addition to the aforementioned brake control ECU 6, as the ECUs supplied with electric power through the auxiliary power supply 7, such as a DC/DC converter, there are an EPS (Electric Power Steering) control ECU 10, a METER control ECU 11, an active mount ECU (not shown), and a suspension ECU (not shown), etc.

The EPS control ECU (10) is an ECU for assist control with a motor or a hydraulic power through detecting a rotation operation by the driver on a steering wheel 3 with a steering angel sensor (not shown).

The METER control ECU 11 inputs a vehicle speed signal from a vehicle speed sensor (not shown), an ABS (Antilock Brake System) ECU (not shown), a rotation speed signal from an engine control ECU 4E, a water temperature signal from a water temperature sensor (not shown), and a fuel signal from a fuel level sensor (not shown), etc. In addition, the METER control ECU 11 performs control of displaying measured values on a speed meter, a rotation speed meter, a fuel meter, a water temperature meter, a distance meter respectively as well as displaying the water temperature with LED (Light Emitting Diode) through a display driver, an LCD(Liquid Crystal Display) driver, and an output port, etc.

The active mount ECU operates to cancel out vibrations of the engine 4 to control vibrations in the vehicle 1. The suspension ECU serves as an electronic control suspension for providing a control-stability and a ride quality by controlling a suspension in accordance with a driving condition.

Next, will be described control during idling stop of the vehicle 1.

The control regarding the idling stop of the vehicle 1 is performed by the engine control ECU 4E as a main part, which communicates with the brake control ECU 6, the SRS control ECU 8, the lighting device control ECU 9, the EPS control ECU 10, the METER control ECU 11, the active mount ECU (vehicle control device), the suspension ECU(vehicle control device), and other ECUs(vehicle control devices), etc. through CAN.

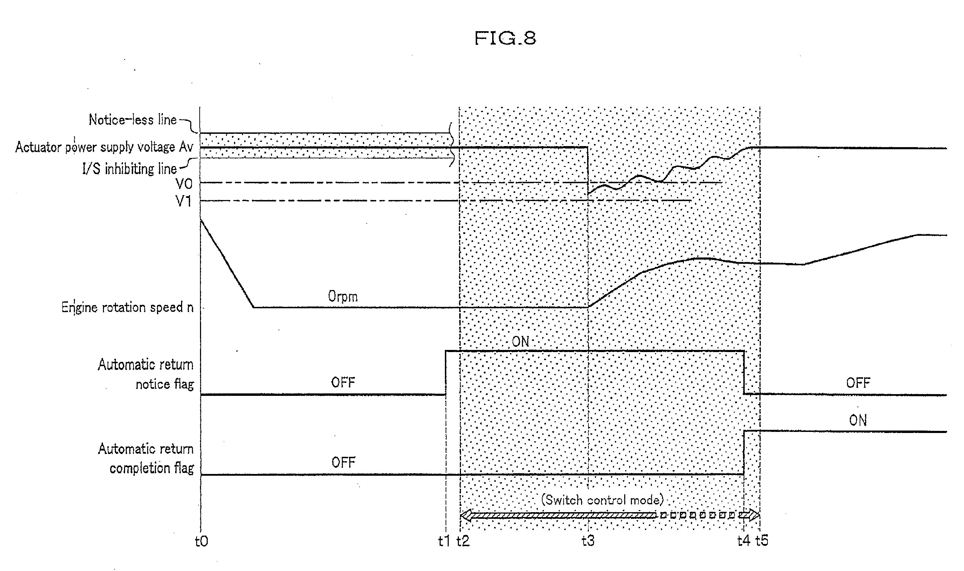

Fig. 8 is a time chart illustrating elements of the idling stop control for the vehicle according to the first embodiment.

An abscissa of Fig. 8 represents time, and an ordinate represents the actuator power supply voltage Av of the hydraulic braking device Y regarding the brake, the engine rotation speed n, an automatic return notice flag, an automatic return completion flag.

The actuator power supply voltage Av is, as shown in Fig. 2, a power supply voltage from the battery 5, supplied to the regulator valve v1, the pump p which are actuators regarding the hill start control.

The automatic-return notice flag (a flag indicating a re-start notice signal) is a flag for noticing a start of the engine 4 from the idling stop and becomes "ON" during noticing the automatic return (rotating the engine 4 with the starter motor) and automatic returning, on the other hand, becomes "OFF" during noticing start of the engine 4 (operation of the engine 4 itself), and starting the engine 4.

The automatic return completion flag (a flag indicated by the automatic return completion signal) becomes "OFF" during the idling stop of the engine 4 and the automatic returning of the engine 4), on the other hand, becomes "ON" during start of the engine 4 (operation of the engine 4 itself).

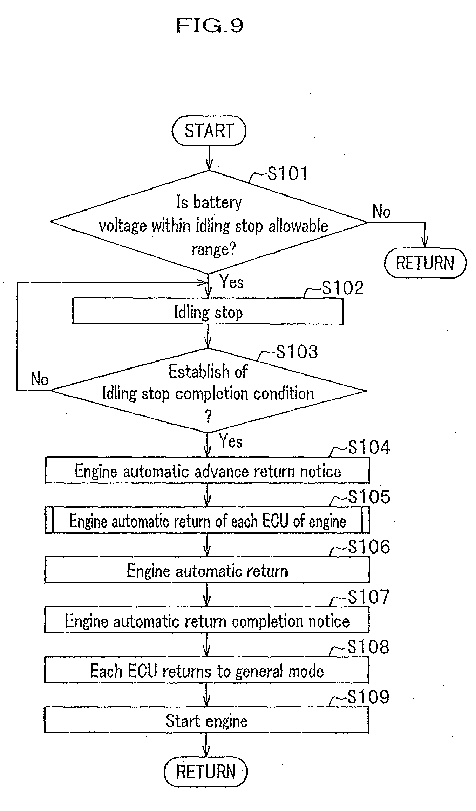

Fig. 9 is a flowchart of the idling stop control for the vehicle 1 according to the first embodiment.

After the vehicle 1 stops, upon making the idling stop, it is determined whether the voltage of the battery 5 is within a predetermined allowable voltage range which can allow the idling stop operation by monitoring the voltage of the battery 5 by the engine control ECU 4E. For example, when a rated voltage of the battery is 12 V, it is determined whether the voltage is equal to or higher than 10 V (within the allowable voltage range) (S101 in Fig. 9). In this case, the battery voltage of 10 V corresponds to the I/S (idling stop) inhibiting line of the actuator power supply voltage Av.

In other words, the engine control ECU 4E inhibits the idling stop when determining that there is a possibility in that the brake control ECU 6 becomes unable to hold the braking force in the hill start assist control because the voltage of the battery 5 is not within the predetermined allowable voltage range in which the idling stop is allowed.

Determination in a step S101 in Fig. 9 is continuously performed during the idling stop from time t0 to time t2 in Fig. 8.

The engine control ECU 4E does not perform the idling stop when the voltage of the battery 5 is not within the predetermined allowable voltage range, that is, the actuator power supply voltage Av is under the I/S inhibiting line (No in S101).

On the other hand, when the voltage of the battery 5 is within the allowable voltage range, that is, the actuator power supply voltage Av is equal to or higher than the I/S inhibiting line (Yes in S101), the idling stop is started and the engine control ECU 4E stops the engine 4 (time t0 in Fig. 8) (S102).

. In this operation, if a notice-less line of the actuator power supply voltage Av is set for the battery voltage to, for example, 13.5 V, when the actuator power supply voltage Av is equal to or higher than the notice-less line, i.e., the voltage of the battery 5 is equal to or higher than 13.5 V, the engine control ECU 4E performs the idling stop control, and a general control (S103, S106, S109 shown in Fig 9) but does not perform the control in S104, S105, S107, S108 shown in Fig. 9. When the actuator power supply voltage Av is equal to or higher the notice-less line, description of the flowchart in Fig. 9 is omitted.

After that, the engine control ECU 4E monitors whether a completion condition of the I/S (idling stop) has been established or not (S103).

For example, the engine control ECU 4E determines that a preset predetermined time interval has elapsed after the engine 4 stops with a timer. When the predetermined time interval has elapsed, this is the completion condition. In addition, it is determined whether a negative pressure of a negative pressure booster (brake booster) decreases to or under a predetermined value. When the negative pressure decreases to or under the predetermined value, this is also the completion condition. In addition, a room temperature within the vehicle 1 is measured with a temperature sensor (not shown). When the room temperature goes outside a preset predetermined range, for example, in summer, the room temperature increases to or above the predetermined temperature, this is also the completion condition. In addition, the brake hydraulic pressure (caliper hydraulic pressure) detected by the master pressure sensor s4 in the hydraulic braking device Y of the brake is subject to determination. When the brake hydraulic pressure is decreased to or under a preset predetermined hydraulic pressure and further when the supplied voltage decreases, these are completion conditions. Regarding these completion conditions, at least one of completion conditions may be used or any completion condition may be used other than the exemplified completion conditions.

When no completion condition of the I/S (idling stop) has established (No in S103), processing proceeds to S102 to continue the I/S (idling stop).

On the other hand, when any of the completion conditions of the I/S (idling stop) has established (Yes in S103), the engine control ECU 4E transmits the automatic-return notice of the engine 4 with a starter motor (not shown) to the brake control ECU 6, the SRS control ECU 8, the lighting device control ECU 9, the EPS control ECU 10, the METER control ECU 11, the active mount ECU, the suspension ECU, and other ECUs (time t1 in Fig. 8) (S104) by changing the signal of the automatic-return notice flag from "OFF" to "ON". In the vehicle 1 with the idling stop function, the engine control ECU 4E performs the condition determination regarding the automatic return of the engine 4, so that it is possible to transmit the notice signal to respective ECUs before the automatic return of the engine 4.

In this operation, the engine control ECU 4E transmits, as shown in Fig. 8, the signal of the automatic return completion flag having a level of "OFF" to the brake control ECU 6, the SRS control ECU 8, the lighting device control ECU 9, the EPS control ECU 10, the METER control ECU 11, and the active mount ECU, the suspension ECU, and other ECUs. In addition, the engine control ECU 4E continuously transmits the signal of the automatic return notice flag and the signal of the automatic-return completion flag to the brake control ECU 6, the SRS control ECU 8, the lighting device control ECU 9, the EPS control ECU 10, the METER control ECU 11, the active mount ECU, the suspension ECU, and other ECUs (see Fig. 8).

When the brake control ECU 6, the SRS control ECU 8, the lighting device control ECU 9, the EPS control ECU (10), the METER control ECU 11, the active mount ECU, the suspension ECU, and other ECUs receive the automatic-return notice of the engine 4 (the automatic return notice flag of "ON" is transmitted), moving to the automatic return mode from the general mode.

More specifically, when the brake control ECU 6 receives the automatic return notice flag of "ON", moderating an operation condition from a general mode such that if a voltage condition V0 (see Fig. 8) of the actuator power supply voltage Av is 10 V, the hill start assist normally functions though the actuator power supply voltage Av is under 10 V. In other words, the brake control ECU 6 releases the restriction in control (voltage condition (minimum limit voltage) V0 of the actuator power supply voltage Av shown in Fig. 8) and changes the voltage condition to the voltage condition V1 in Fig. 8 (moderating the operation condition).

Here, before change to the voltage condition V1, the actuator power supply voltage Av inputted through the voltage detection terminal VD is compared with the voltage condition (threshold value) V0, the brake control ECU 6 stops supplying the electric power to the regulator valve v1 and the pump p used for the hill start assist control when the actuator power supply voltage Av decreases under the voltage condition V0.

However, when the voltage condition to the voltage condition V1 (V1 < V0), the brake control ECU 6 does not stop supplying the electric power to the actuators such as the regulator valve v1 and the pump p used for the hill start assist control as long as the actuator power supply voltage Av decreases under the voltage condition V1. Accordingly, because the voltage condition V0 is changed to the voltage condition V1, any alarm is not generated at an instrument panel, and the electric power is not stopped to the actuators (actuators regarding the control for maintaining the braking force) such as the regulator valve v1 and the pump p used for the hill start assist control as long as the actuator power supply voltage Av decreases under the voltage condition V1 though the actuator power supply voltage Av decreases under the voltage condition V0.

Accordingly, during time t1 to t4 in Fig. 8, when the actuator power supply voltage Av does not become under the voltage condition V1, the actuator power supply voltage Av is supplied to the regulator valve v1 of the actuator, etc. and the hill start assist control described before is performed.

According to this configuration, though the actuator power supply voltage Av is low, that is, lower than the voltage condition V0, the hill start assist control is performed.

In this operation, it is preferable to restrict the control modes to the control modes which can be performed at the same time as the moderation of the operation condition. For example, operation of the pump p and detection of various types of sensor are turned OFF or only the regulator valve v1 is controlled.

In addition, similarly, in a CAN communication blackout diagnosis, an error determination condition is moderated (that is, a blackout allowable time is extended or the diagnosis is stopped).

Different from this embodiment, when it is necessary to turn on the first and second In-valves v2, v5 which are IN valves and the first and second out-valves v3, v6, the first and second In-valves v2, v5 which are IN valves and the first and second out-valves v3, v6 are included in a control target.

In addition, in the embodiment, configuration is such that the battery voltage is determined first. However, the configuration may be made such that when the advance notice of the engine automatic return is received, the determination of the battery voltage may be made again.

On the other hand, the SRS control ECU 8, the lighting device control ECU 9, the EPS control ECU 10, the METER control ECU 11, the active mount ECU, the suspension ECU, and other ECUs move to the engine automatic return mode from the general mode, and stop various types of diagnoses by turning OFF" sensor detection with various types of sensors from "ON" and the black out diagnosis of CAN communication with other ECUs, suppress or stop the electric power to used actuators (S105). In addition, these ECUs also monitor the actuator power supply voltage Av through the respective voltage detection terminals (not shown).

More specifically, in addition to stop of the CAN communication black out diagnosis, for example, the SRS control ECU 8 stops only the self diagnosis of various types of sensors in consideration of rear-end collision.

The lighting device control ECU 9 decreases illumination intensities of the head lamps (main lamps) Lr, L1, brake lamps b1r, b1l, turns off the room lamp, and stops control for the cornering lights c1r, c1l when the cornering lights c1r, c1l are not turned on.

The EPS control ECU 10 does not stop control of sensors such as the steering angle sensor, but stops driving the assist motor.

In addition, the active mount ECU and the suspension ECU stop control if necessary, and stop additional functions such as a radar.

These controls of respective ECUs in the engine automatic return mode are only examples, and can be optionally selected. In addition, if necessary, it may be done to stop supplying a electric power to any one of ECUs. More specifically, power supply to or diagnosis in each ECU of at least one of the vehicle control devices other than the engine control ECU 4E and the brake control ECU 6 may be temporarily stopped.

As described above, prior to the automatic return upon restarting of the engine 4, power supply to at least one of the SRS control ECU 8, the lighting device control ECU 9, the EPS control ECU 10, the METER control ECU 11, the active mount ECU, the suspension ECU, and other ECUs other than the engine control ECU 4E and the brake control ECU 6 which are vehicle control devices, diagnosis by sensors, or power supply to the actuators are temporarily stopped.

Each of the ECUs can prevent error detection in connecting parts requiring a sufficient voltage when the voltage decreases due to electric power consumption by the starter motor upon the automatic return of the engine 4 by stopping the diagnoses with various types of sensors, etc. in addition to stopping the CAN communication black out diagnosis. As a result, the electric power for functions necessary for the engine automatic return mode is kept, on the other hand, a electric power for the function having a low necessity is saved.

According to the control in S105, irrespective of voltage drop of the battery 5 caused upon the automatic return from the idling stop, the erroneous detection in each of the ECUs are prevented, so that it can be stopped to generate the alarm.

After that, control by the engine control ECU 4E, at time t3 in Fig. 8, a current is supplied to the magnet switch of the starting device (not shown) from the battery 5, a flywheel of the engine 4 is geared with a pinion gear fixed to a shaft of the starter motor (not shown). Shift of the pinion gear turns the switch on, so that a current is supplied to the starter motor, which starts the automatic return of the engine 4 (S106). In this operation, because the voltage of the battery 5 is consumed as an electric power for operating the starter motor, the magnet switch, etc., the actuator power supply voltage Av rapidly decreases (see time t3 in Fig. 8).

The rotation speed of the engine 4 gradually increases by drive by the starter motor (time t3 to t4 in Fig. 8). Information of the rotation speed of the engine 4 is obtained by a crank position sensor (not shown) as crank pulses which are transmitted to the engine control ECU 4E through the CAN.

When the rotation speed of the engine 4 reaches a predetermined value at which the engine 4 can start itself (time t4 in Fig. 8), the engine control ECU 4E changes the automatic return notice flag signal from "ON" to "OFF" as well as changes the automatic return completion flag signal from "OFF" to "ON", and transmits these signals to the brake control ECU 6, the SRS control ECU 8, the lighting device control ECU 9, the EPS control ECU 10, the METER control ECU 11, the active mount ECU, the suspension ECU, and other ECUs respectively to give them a notice that the automatic return of the engine 4 will complete soon (S107).

The automatic return completion is determined from the engine rotation speed by the engine control ECU 4E. However, it is possible to determine with such a condition that the voltage supplied from the battery 5 is a normal voltage.

The brake control ECU 6, the SRS control ECU 8, the lighting device control ECU 9, the EPS control ECU 10, the METER control ECU 11, the active mount ECU, the suspension ECU, and other ECUs which the automatic return completion of the engine 4 is noticed return to the general mode (general control mode) from the engine automatic return mode.

More specifically, the brake control ECU 6 which the automatic return completion of the engine 4 is noticed returns (recovery) the actuator power supply voltage Av from the voltage condition V1 to the voltage condition V0. This is because change in the actuator power supply voltage Av from the voltage condition V0 to V1 is inherent to time while the idling stop is performed. That is, then the voltage is low at the time of the engine automatic returning, there is a mixture of the ECUs (6, 10, 11) not having a voltage drop and other ECUs (8, 9) having a voltage drop, because of the presence or absence of an auxiliary power supply 7. Therefore, if the actuator power supply voltage Av is equal to or greater than the voltage condition V1 at the time of the engine automatic returning, the ECUs (6, 10, 11) not having a voltage drop can surly perform. After the engine automatic return completion, the actuator power supply voltage Av is checked whether or not it is kept more than the voltage condition V0, so that the entire ECUs can surely perform. In addition, the brake control ECU 6 notified the engine automatic return completion releases the restriction of shifting to the control mode which can be performed. In addition, the restriction of shifting to control modes which become able to be done is released.

On the other hand, the brake control ECU 6, the SRS control ECU 8, the lighting device control ECU 9, the EPS control ECU 10, the METER control ECU 11, the active mount ECU, the suspension ECU, and other ECUs which the automatic return completion of the engine 4 is noticed change detection with various sensors from "OFF" to "ON", start blackout diagnosis of the CAN communication with other ECUs, return the mode of the power used in actuator to the general mode.

In other words, the engine control ECU 4E transmits the automatic return completion notice to each ECU when the automatic return is completed. When receiving this information, each ECU returns to the general mode, for example, re-starting the diagnosis that has been stopped.

This makes it possible to prevent an erroneous detection of a failure in each ECU during the automatic returning from the idling stop, which prevents useless generation of alarms.

Next, at time t5 in Fig. 8, the engine control ECU 4E stops supplying electric power to the starting device from the battery 5, supplying electric power to the magnet switch, so that the pinion gear fixed to the axis of the starter motor becomes apart from the flywheel of the engine 4, as well as stops supplying electric power to the starter motor, so that the automatic return of the engine 4 completes. Next, the engine control ECU 4E transmits output signals to various actuators such as fuel supplying device and ignition device for starting the engine 4 to start up the engine 4 (S109).

The description above is for flow of the idling stop control for the vehicle 1 shown in Fig. 9.

Here, there may be a case where a consumed power may become large because a viscosity of engine oil increases in accordance with a condition such as a low temperature condition, so that a viscosity resistance increases, which increases a load quantity of the starter motor for the automatic return of the engine 4, so that a power consumption may become large. In this case, power to various ECUs which are vehicle control devices will decrease.

Then, it is preferable that a motor circumferential status determining means is provided for determining a circumferential state of the engine 4 in the engine control ECU 4E, and that a consumed electric power decreasing level changing means is provided for changing a consumed electric power decreasing level in various types of ECUs in the engine control ECU 4E and other respective ECUs.

In other words, the motor circumference state determining means predicts voltage drops of various ECUs, which are vehicle control device, on the basis of the ambient temperature measured by a temperature sensor (not shown), or an oil temperature of engine oil measured by a temperature sensor particularly at a low temperature at a cold area. Next, the consumed electric power decreasing level changing means changes consumed electric power consumption decreasing level for various types of ECUs, which are vehicle control devices.

For example, at an extremely low temperature around cold areas, a load increases because the viscosity of the engine oil increases, so that a consumed power during the automatic return of the engine 4 becomes large. Accordingly, the power consumption decreasing degrees of the various types of ECUs are changed to be large. On the other hand, at warm areas, because the viscosity of the engine oil becomes lower and the load decreases, so that the power consumption during the automatic return changes to a lower side. Accordingly, the power consumption decreasing degrees of the various ECUs are changed to be smaller.

According to the first embodiment, during cranking, the power consumption (voltage) can be suppressed by appropriately stopping the CAN communication diagnosis function and the diagnosis functions with the sensors. With such configuration, starting the engine 4 can be smoothly performed as well as the configuration does not give a strange feeling to the driver because an unnecessary alarm is not generated due to stop of unnecessary diagnosis function.

Accordingly, a smooth idling stop control is provided.

In addition, in the first embodiment, the hill start assist control has been described with the braking force holding control exemplified, which temporarily holds the braking force generated by operating the brake pedalp2. However, this control is applicable, in addition to the hill start assist, to a brake holding for holding the braking force and a slope rearward movement suppressing system (CAS: Creep Aided system) for holding the braking force necessary when the foot is released from the brake pedal p2 , which are the same type as the hill start assist and can be performed during the automatic return.

As described above, there are controls which can holds stopping in such a state that a foot is released from the brake pedal p2 while the vehicle 1 is stopping, which are similarly returned to the general mode by starting the engine 4 when the driver presses the accelerator pedal p1.

For example, these controls are also applicable to a function of holding the braking force even in such a state that the foot is released from the brake pedal p2.

In addition, the battery rated voltages of 12 V, the battery voltages of 10 V, 13.5 V, which have been exemplified in the first embodiment described above, are only examples, and not limited thereto.

### «Second Embodiment»

Next, will be described the hill start assist during the idling stop of the vehicle 1 according to a second embodiment.

The control regarding the idling stop in the vehicle 1 is carried out by the engine control ECU 4E mainly communicates with the brake control ECU 6 through the CAN.

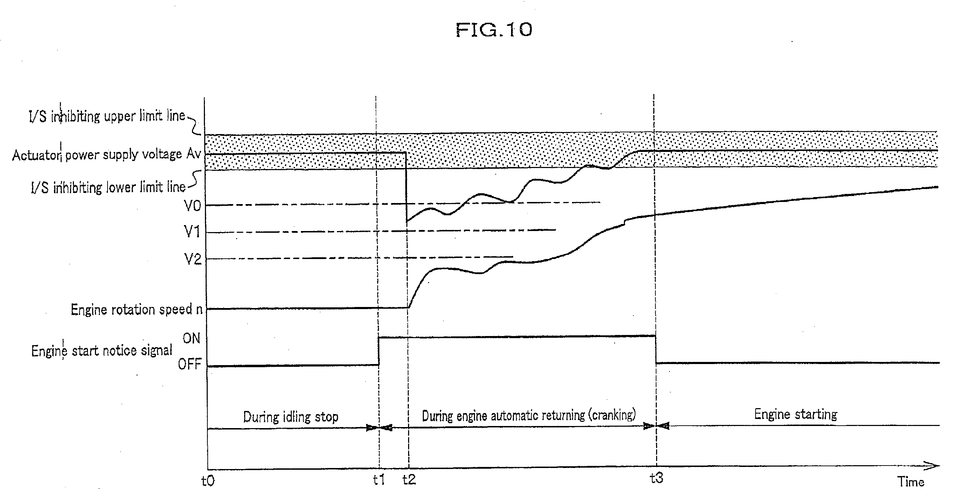

Fig. 10 is a time chart illustrating elements of the idling stop control with the hill start assist control for the vehicle according to the second embodiment. Fig. 10 shows time in the abscissa and the actuator power supply voltage Av, the engine rotation speed n, and an engine start notice signal in ordinate.

The actuator power supply voltage Av is, as shown in Fig. 2, a power supply voltage applied from the battery 5 to the regulator valve v1, the pump p, etc. which are actuators regarding the hill start assist control.

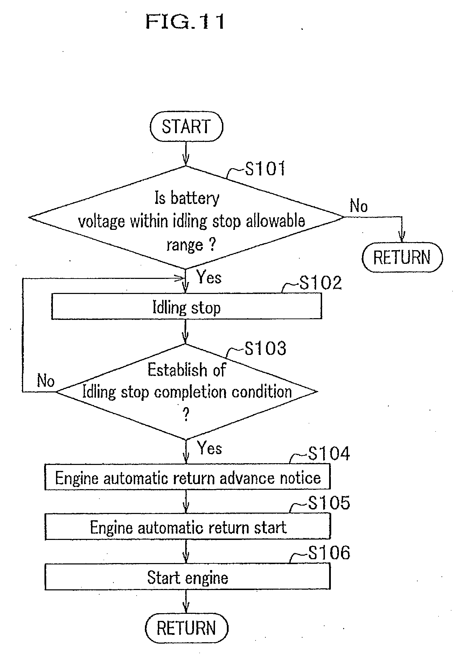

Fig. 11 is a flowchart of the idling stop control with the hill start assist control for the vehicle according to the second embodiment.

It is determined whether the voltage of the battery 5 is within a predetermined allowable voltage range for performing the idling stop by that the engine control ECU 4E monitors the voltage of the battery 5 upon performing the idling stop. For example, when the battery voltage is 12 V, an I/S (idling stop) inhibiting upper limit line is set to 13.5 V, and an I/S (idling stop) inhibiting lower limit line is set to 10 V. In other words, it is determined whether the actuator power supply voltage Av is equal to or lower than the I/S (idling stop) inhibiting upper line in Fig. 10 and equal to or higher than the I/S inhibiting lower limit line (S101 in Fig. 11).

More specifically, when determining that there is a possibility that the braking force holding by the brake control ECU 6 for the hill start assist control becomes impossible, the engine control ECU 4E inhibits the idling stop.

Determination in S101 in Fig. 11 is continuously carried out during the idling stop from time t0 to t1 in Fig. 10.

When the actuator power supply voltage Av (the voltage of the battery 5) exceeds the I/S inhibiting upper limit line and when the actuator power supply voltage Av is under the I/S inhibiting lower limit line, (No in S101), the engine control ECU 4E does not perform the idling stop.

When the actuator power supply voltage Av (the voltage of the battery 5) is under the I/S inhibiting upper line and the actuator power supply voltage Av is above the I/S inhibiting lower limit line, (Yes in S101), the engine control ECU 4E starts the idling stop and stops the engine 4 (S102).
the engine control ECU 4E monitors whether the I/S (idling stop) completion condition is established (S103).

For example, the engine control ECU 4E determines whether a preset predetermined time period elapses after the engine 4 stops. When the predetermined time period elapses, the completion condition is established. Alternatively, it is determined whether a negative pressure of the negative booster (brake booster), wherein the completion condition is established when the negative pressure becomes equal to or lower than the predetermined value. Alternatively, in a case where a room temperature within the vehicle 1 is measured with a temperature sensor, when the room temperature is outside the preset predetermined range, it is determined that the completion condition is established. Alternatively, it is determined whether the brake hydraulic pressure (caliper hydraulic pressure) detected by the master pressure sensor s4 of the master cylinder Y1. When the brake hydraulic pressure becomes equal to or lower than the preset predetermined hydraulic pressure and when the voltage further decreases the completion conditions are satisfied. At least one of these completion conditions is used. A completion condition other than the exemplified completion conditions can be applied.

When the completion condition of the I/S (idling stop) is not established (No in S103), processing proceeds to S102, where the I/S (idling stop) is continued.

On the other hand, when a completion condition of the I/S (idling stop) is established (time t1 in Fig. 10) (Yes in S103), the engine control ECU 4E sends the notice of the engine automatic return to the brake control ECU 6 (at time t1 in Fig. 10) (SI04) by changing the engine start notice signal from OFF to ON (re-start notice signal).

In a case where the brake control ECU 6 receives the engine start notice signal indicating ON, when the voltage condition V0 (see Fig. 10) of the actuator power supply voltage Av is 10 V, the operation condition is moderated to allow the hill start assist to normally function the actuator power supply voltage Av, even when the actuator power supply voltage Av is under 10V. More specifically, the limit in control (the voltage condition of the actuator power supply voltage Av in Fig. 10 (the minimum limit voltage value) V0 is released and is changed to the voltage condition V1 in Fig. 10.

In addition, before the change to the voltage condition V1, when the actuator power supply voltage Av becomes under the voltage condition V0, the brake control ECU 6 stops supply of the power supply to the actuators such as the regulator valve v1 and the pump p used in the hill start assist control.

However, when the voltage condition is changed to the voltage condition V1, the brake control ECU 6 does not stop supply to the power supply to the actuators such as the regulator valve v1 and the pump p used in the hill start assist control as long as the actuator power supply voltage Av becomes under the voltage condition VI.

Accordingly, because the voltage condition V0 is changed to the voltage condition V1, the supply from the power supply to the actuators such as the regulator valve v1 and the pump p, used in the hill start assist control is not stopped though the actuator power supply voltage Av becomes under the voltage condition V0 as long as the actuator power supply voltage Av does not become under the voltage condition VI.

Accordingly, because the voltage condition V0 is changed to the voltage condition V1, any alarm is not generated at the instrument panel and the supply from the power supply to the actuators such as the regulator valve v1 and the pump p, used in the hill start assist control is not stopped though the actuator power supply voltage Av becomes under the voltage condition V0 as long as the actuator power supply voltage Av does not become under the voltage condition V1.

Accordingly, from the time t1 to time t3 in Fig. 10, when the actuator power supply voltage Av does not become under the voltage condition V1, the actuator power supply voltage Av is supplied to the regulator valve v1 which is an actuator and the aforementioned hill start assist control is performed.

With this configuration, the hill start assist control is performed even under a low voltage.

Regarding this, it is preferable that the control mode is restricted to the control modes which can be carried out at the same time as the operation condition is moderated. For example, operation of the pump p and detection with various types of the sensors are turned OFF, and control by only the regulator valve v1 shown in Fig. 4 is performed.

In addition, in the blackout diagnosis of the CAN communication in the CAN communication with another ECU by the brake control ECU 6, the error determination condition is moderated (that is, a blackout allowable time is extended or the diagnosis is stopped).

Different from the embodiment, in a case where it is necessary to supply power to the first and second in-valves v2, v5, which are IN valves and first and second out-valves v3, v6 which are OUT valves, control is performed including the first and second in-valves v2, v5 which are IN valve and the first and second OUT valves v3, v6 which are OUT valves.

In the embodiment, configuration is provided in such that the battery voltage is determined first. However, the configuration may be determined again at time when the advance notice of the engine automatic return is received, configuration is provided such that determination regarding the battery voltage is made at time when the advance notice of the engine automatic return.

After that, time t2 in Fig. 10, a current is supplied to a magnet switch of the start device (not shown) from the battery 5 under the control of the engine control ECU 4E, which causes the pinion gear fixed to the shaft of the starter motor (not shown) to be geared with the flywheel of the engine 4. Shift of the pinion gear turns on a switch, which supplies the current to the starter motor, the automatic return of the engine 4 is started (after time t2 in Fig. 10) (S105). In this operation, because the voltage of the battery 5 is consumed as a power for operating the starter motor and the magnet switch, etc., the actuator power supply voltage Av rapidly decreases (see time t2 in Fig. 10).

The rotation speed of the engine 4 gradually increases by drive by the starter motor (time t2 to t3 in Fig. 10). Information of the rotation speed of the engine 4 is obtained with the crank position sensor and transmitted to the engine control ECU 4E through CAN as the crank pulses.

When the rotation speed of the engine 4 reaches to a predetermined value at which the engine 4 can start itself (time t3 in Fig. 10), supplying power to the starting device from the battery 5 is stopped, so that supply power to the magnet switch is stopped. Accordingly, the pinion gear attached to the shaft of the starter released from the flywheel of the engine 4 as well as supplying power to the starter motor is stopped.

At the same time, the engine control ECU 4E transmits output signals to various types of actuators such as the fuel device and ignition device, and the engine is started (S106). In this operation, the engine start notice signal transmitted to the brake control ECU 6 from the engine control ECU 4E is turned OFF (start completion signal) from ON (time t3 in Fig. 10).

The brake control ECU 6 receiving the engine start notice signal of OFF returns (recover) the voltage condition V1 of the actuator power supply voltage Av to the voltage condition V0. This is because change from the voltage condition V0 to the voltage condition V1 regarding the actuator power supply voltage Av is inherent to the operation during the idling stop.

The flow of the idling stop control with the hill start assist control for the vehicle 1 shown in Fig. 11 has been described.

Here, there may be a case where a consumed power may become large because a viscosity of engine oil increases in accordance with a condition such as a low temperature condition, so that a viscosity resistance increases, which increases a load quantity of the starter motor for the automatic return of the engine 4, so that a power consumption may become large.

Then, it is preferable that a motor circumferential status determining means is provided for determining a circumferential state of the engine 4 in the brake control ECU 6, and that a moderating degree changing means is provided for changing a moderating degree of the voltage condition of the actuator power supply voltage Av..

More specifically, the motor circumference state determining means predicts voltage drops of various ECUs, which are vehicle control device, on the basis of the ambient temperature measured by a temperature sensor (not shown), or an oil temperature of engine oil measured by a temperature sensor particularly at a low temperature at a cold area. Next, the moderating degree changing means changes the moderating degree of the voltage condition of the actuator power supply voltage Av, from the voltage condition V1 to the voltage condition V2.

As described above, at a low temperature, a load quantity on the starter motor becomes large, so that a voltage drop quantity of the actuator power supply voltage Av supplied from the battery 5 becomes large. Accordingly, it is preferable to moderate the operation condition of the actuator power supply voltage Av beforehand in accordance with the circumference of the vehicle 1.

More specifically, when the actuator power supply voltage Av can be previously expected to largely drop, for example, at an extremely low temperature, etc., the hill start assist control can be made possible by changing the moderation degree of the operation condition regarding the actuator power supply voltage Av (the voltage condition V1 to V2) through obtaining the circumferential information of the vehicle 1.

In addition, the moderation degree changing means may change the moderation degree of the operation condition regarding the actuator power supply voltage Av toward a smaller value when the voltage drop is expected to be small by the motor circumferential state determining means. For example, the voltage condition V1 is changed to become close to the voltage condition V0.

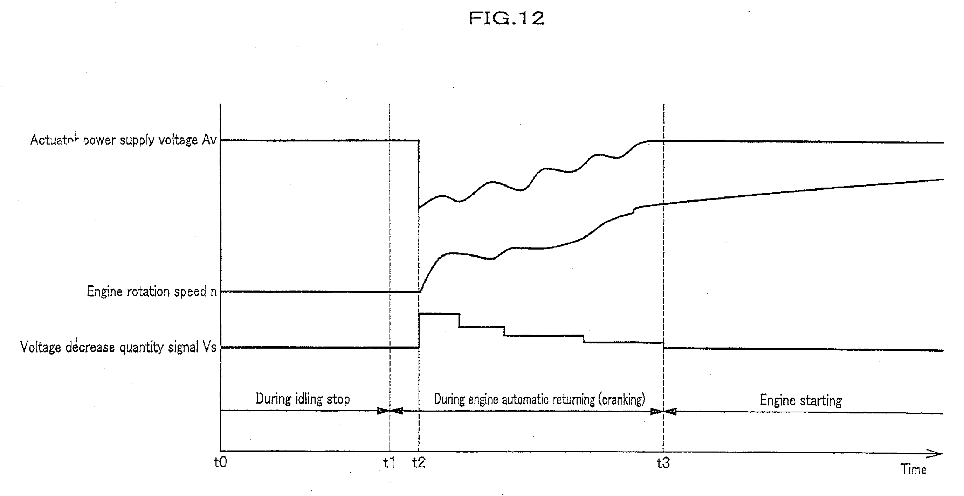

Fig. 12 is a time chart illustrating elements including a voltage decrease quantity in the hill start assist control during the idling stop of the vehicle 1 according to the second embodiment. An abscissa represents time, and an ordinate represents the actuator power supply voltage Av, the engine rotation speed n, and a voltage drop quantity signal Vs.

At time t2 in Fig. 12, when the engine 4 is automatically recovered with the starter motor, the voltage drop of the actuator power supply voltage Av is generated because the battery voltage is largely consumed.

Accompanying this, the voltage drop quantity signal Vs of the actuator power supply voltage Av is transmitted to the brake control ECU 6, the engine control ECU 4E, and other ECUs through the CAN.

As the engine rotation speed n increases, an electric power by the generator 4h shown in Fig .2 is stored in the battery 5, so that the actuator power supply voltage Av increases. Accordingly, the voltage drop quantity signal Vs decreases in the quantity.

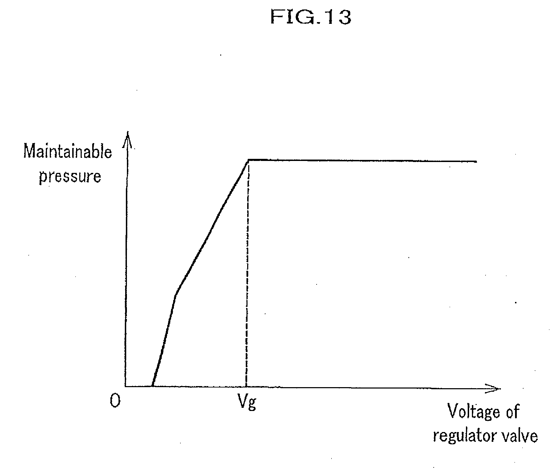

Fig. 13 is an illustration illustrating a relation between a voltage applied to the regulator valve v1 of the hydraulic pressure control device Y operating the brake according to the second embodiment and the caliper hydraulic pressure which the regulator valve v1 can hold.

A maintainable hydraulic pressure increases as increase in the voltage (corresponding to the actuator power supply voltage Av) applied to the regulator valve v1. However, because the voltage reaches a predetermined voltage Vg, the regulator valve v1 reaches a saturated magnetic flux density, the physically- or mechanically- maintainable hydraulic pressure becomes constant.

The brake control ECU 6 can restrict the control quantity based on a voltage-maintainable hydraulic pressure map shown in Fig. 13 by obtaining the voltage drop quantity signal Vs of the actuator power supply voltage Av. For example, it may be possible to change the voltage applied to the regulator valve v1 in accordance with the various conditions such as the forward-rearward acceleration, an inclination angle on a slope of the vehicle 1.

According to the vehicle 1 with the idling stop of the second embodiment, the power supply voltage is supplied to the engine control ECU 4E and the brake control ECU 6 as a computing part through the auxiliary power supply 7 such as the DC/DC converter. Accordingly the engine control ECU 4E and the brake control ECU 6 can normally perform operation even at the starting the engine.

Under configuration of the system, the engine control ECU 4E previously notices the automatic return of the engine 4 with the engine start notice signal (the engine start notice signal is ON at time t1 in Fig. 10), and the brake control ECU 6 receives the information of the automatic return of the engine 4.

When receiving the information, the brake control ECU 6 predicts that the power supply voltage will decrease, releases the limit in control (voltage condition V0) to allow the hill start assist to normally function even when the power supply voltage is under, for example, 10 V of the voltage condition V0, and sets the voltage condition to V1.

According to this, the brake control ECU 6 can normally perform operation and the hill start assist can normally function also during the automatic return from the idling stop.

In addition, the second embodiment has been described with the hill start assist control exemplified. However, in addition to the hill start assist control, the present invention is applicable to the same kind of control which can be performed during the automatic return such as brake holding for holding the braking force and a rearward movement on-slope suppressing system (CAS: Creep Aided system) for holding a braking force necessary while the foot is released from the brake pedal p2 on a slope. As mentioned above, there is a control which can hold to stop in such a state that the foot is released from the brake pedal p2 during stop of the vehicle 1.

In addition, as aforementioned, a voltage drop quantity upon the automatic return of the engine 4 is predicted and the drop quantity is informed, and thus, it is possible to restrict the control quantity based on a voltage-maintainable hydraulic pressure map in accordance with the informed drop quantity.

In addition, in the first and second embodiments, the CAN (Controller Area Network) is exemplified as a communication method in the vehicle 1. However, other communication methods are usable and the invention is not limited to any particular communication method such as J1850 and ISO9141.

In addition, in the first and second embodiments, various configurations have been described. The described configurations may be combined.

In addition, in the first and second embodiments, a four-wheel vehicle is exemplified as the vehicle 1. The present invention is applicable to other vehicles such as a motor truck. The invention is widely applicable to vehicles other than the exemplified four-wheel vehicle.

1 Vehicle
4 Engine (motor)
4E Engine control ECU (a motor control device, a consumed power decreasing means, a power source state monitoring means, an engine circumference state determining means, consumed power decreasing degree changing means)
5 Battery (power source for vehicle).
6 Brake control ECU (braking control unit, operation condition moderating means, engine circumference state determining means, a power consumption decreasing means, moderating degree changing means)
8 SRS control ECU (vehicle control unit, consumed power decreasing means, consumed power decreasing degree changing means)
9 Lighting device control ECU 9 (vehicle control unit, consumed power decreasing means, consumed power decreasing degree changing means)
10 EPS control ECU (vehicle control unit, consumed power decreasing means, consumed power decreasing degree changing means)
11 METER CONTROL ECU (vehicle control unit, consumed power decreasing means, consumed power decreasing degree changing means)
p Pump (actuator)
p2 Brake pedal
v1 Regulator valve (actuator)

## Claims

1. An idling stop system for stopping and re-starting a motor (4) in a traveling stop state of a vehicle (1), comprising:
a braking control unit (6) for performing a braking force holding control for at least temporarily holding a brake force generated by operation of a brake pedal (p2); and
a motor control unit (4E) for re-starting the motor which is stopping when a predetermined re-start condition is established during the operation of the brake pedal; **characterized by**
consumed electric power decreasing means (4E, 8, 9, 10, 11) for decreasing a consumed electric power for a part except the motor control unit (4E) prior to the re-starting of the motor,
and for decreasing a minimum limit voltage (V0) that is a condition for performing the braking force holding control regarding a voltage (Av) which is supplied to be applied to an actuator (p, v1) regarding the braking control unit (6).

2. The idling stop system as claimed in claim 1, wherein the consumed electric power decreasing means temporarily stops supplying an electric power or a diagnosis for at least one of vehicle control devices (8, 9, 10, 11) other than the motor control unit (4E) and the braking control unit (6).

3. The idling stop system as claimed in claim 1 or 2, wherein the motor control unit transmits a re-start notice signal to the braking control unit (6) and the vehicle control device prior to the re-starting of the motor as well as an automatic return completion signal to the braking control unit and the vehicle control device after completion of an automatic return upon the re-starting; the braking control unit (6) decreases the minimum limit voltage (V0) which is the condition for performing the braking force holding control regarding the voltage (Av) which is supplied to be applied to the actuator regarding the braking control unit with the consumed electric power decreasing means when receiving the re-start notice signal;
at least one of the vehicle control devices suppresses control of an actuator or a sensor regarding at least one of the vehicle control devices when receiving the re-start notice signal; and
the braking control unit (6) and the vehicle control device (8, 9, 10, 11) return to a general control mode when receiving the automatic return completion signal.

4. The idling stop system as claimed in claim 1 or 2, wherein the braking control unit (6) decreases the minimum limit voltage (V0) which is the condition for performing the braking force holding control regarding the voltage (Av) supplied to be applied to the actuator regarding the braking control unit (6) with the consumed electric power decreasing means and simultaneously restricts control modes which can be performed.

5. The idling stop system as claimed in claim 1 or 2, further comprising power supply state monitoring means (4E) for monitoring a voltage status of a power supply of the vehicle, wherein when determining whether a possibility that the braking force holding by the braking control unit (6) becomes impossible from the voltage status, the stopping and re-starting of the motor (4) is inhibited.

6. The idling stop system as claimed in claim 2, further comprising:
a motor circumference state determining means (6) for determining a circumference state of the motor (4); and
consumed electric power decreasing degree changing means (8) for changing the consumed electric power decreasing degree of the vehicle control devices (8, 9, 10, 11) on the basis of the circumference state determined by the motor circumference state determining means.

7. The idling stop system as claimed in claim 1 or 2, wherein the motor control unit (4E) transmits, prior to the re-start of the motor (4), a re-starting notice signal to the braking control unit (6) as well as a start completion signal to the braking control unit after completion of the re-starting; and wherein
the braking control unit (6) decreases the minimum limit voltage (V0) which is the condition for performing the braking force holding control regarding the voltage (Av) which is supplied to be applied to the actuator (p, v1) regarding the braking control unit (6) with the consumed electric power decreasing means when receiving the re-starting notice signal and terminates the control for decreasing the minimum limit voltage (V0) of the consumed electric power decreasing means when receiving the start completion signal.

8. The idling stop system as claimed in claim 1 or 2, wherein the braking control unit (6) decreases the minimum limit voltage (V0) which is the condition for performing the braking force holding control regarding the voltage (V0) supplied to be applied to the actuator (p, v1) regarding the braking control unit (6) with the consumed electric power decreasing means (4E, 8, 9, 10, 11) and simultaneously restricts control modes which can be performed.

9. The idling stop system as claimed in claim 1, further comprising:
a motor circumference state determining means (6) for determining a circumference state of the motor (4); and
moderating degree changing means (6) for changing the minimum limit voltage on the basis of the circumference state determined by the motor circumference state determining means.

## Patentansprüche

1. Leerlaufstoppsystem zum Stoppen und Wiederanlassen eines Motors (4) in einem Fahr-Stopp-Zustand eines Fahrzeugs (1), welches aufweist:
eine Bremssteuereinheit (6) zur Durchführung einer Bremskrafthaltesteuerung zum wenigstens zeitweiligen Halten einer durch Betätigung eines Bremspedals (p2) erzeugten Bremskraft; und
eine Motorsteuereinheit (4E) zum Wiederanlassen des gestoppten Motors, wenn während der Betätigung des Bremspedals eine vorbestimmte Wiederanlassbedingung erfüllt ist; **gekennzeichnet durch** ein Verbrauchte-elektrische-Energie-Minderungsmittel (4E, 8, 9, 10, 11) zum Mindern einer verbrauchten elektrischen Energie für ein Teil außer der Motorsteuereinheit (4E) vor dem Wiederanlassen des Motors,
und zum Mindern einer minimalen Grenzspannung (V0), die eine Bedingung zur Durchführung der Bremskrafthaltesteuerung in Bezug auf eine Spannung (Av) ist, die zum Anlegen an einen Aktuator (p, v1) in Bezug auf die Bremssteuereinheit (6) zugeführt wird.

2. Das Leerlaufstoppsystem nach Anspruch 1, wobei das Verbrauchteelektrische-Energie-Minderungsmittel eine Zufuhr von elektrischer Energie oder eine Diagnose für zumindest eine von Fahrzeugsteuervorrichtungen (8, 9, 10, 11) außer der Motorsteuereinheit (4E) und der Bremssteuereinheit (6) zeitweilig stoppt.

3. Das Leerlaufstoppsystem nach Anspruch 1 oder 2, wobei die Motorsteuereinheit ein Wiederanlassmeldesignal an die Bremssteuereinheit (6) und die Fahrzeugsteuervorrichtung vor dem Wiederanlassen des Motors sowie ein Automatik-Rückkehr-Abschlusssignal an die Bremssteuereinheit und die Fahrzeugsteuervorrichtung nach Abschluss der automatischer Rückkehr beim Wiederanlassen sendet;
die Bremssteuereinheit (6) die minimale Grenzspannung (V0), die die Bedingung zur Durchführung der Bremskrafthaltesteuerung in Bezug auf die Spannung (Av) ist, die zum Anlegen an den Aktuator in Bezug auf die Bremssteuereinheit zugeführt wird, mit dem Verbrauchteelektrische-Energie-Minderungsmittel mindert, wenn das Wiederanlassmeldesignal empfangen wird;
zumindest eine der Fahrzeugsteuervorrichtungen die Steuerung eines Aktuators oder eines Sensors in Bezug auf zumindest eine der Fahrzeugsteuervorrichtungen unterdrückt, wenn das Wiederanlassmeldesignal empfangen wird; und
die Bremssteuereinheit (6) und die Fahrzeugsteuervorrichtung (8, 9, 10, 11) zu einem allgemeinen Steuermodus zurückkehren, wenn das Automatik-Rückkehr-Abschlusssignal empfangen wird.

4. Das Leerlaufstoppsystem nach Anspruch 1 oder 2, wobei die Bremssteuereinheit (6) die minimale Grenzspannung (V0), die die Bedingung zur Durchführung der Bremskrafthaltesteuerung in Bezug auf die Spannung (Av) ist, die zum Anlegen an den Aktuator in Bezug auf die Bremssteuereinheit (6) zugeführt wird, mit dem Verbrauchteelektrische-Energie-Minderungsmittel mindert und gleichzeitig Steuermodi, die durchgeführt werden können, begrenzt.

5. Das Leerlaufstoppsystem nach Anspruch 1 oder 2, das ferner ein Stromversorgungszustand-Überwachungsmittel (4E) zum Überwachen eines Spannungszustands einer Stromversorgung des Fahrzeugs aufweist, wobei, wenn bestimmt wird, ob die Möglichkeit besteht, dass das Halten der Bremskraft durch die Bremskraftsteuereinheit (6) wegen dem Spannungszustand unmöglich wird, das Stoppen und Wiederanlassen des Motors (4) verhindert wird.

6. Das Leerlaufstoppsystem nach Anspruch 2, das ferner aufweist:
ein Motorumgebungszustand-Bestimmungsmittel (6) zum Bestimmen eines Umgebungszustands eines Motors (4); und
ein Verbrauchte-elektrische-Energie-Minderungsgrad-Änderungsmittel (8) zum Ändern des Verbrauchte-elektrische-Energie-Minderungsgrads der Fahrzeugsteuervorrichtungen (8, 9, 10, 11) auf der Basis des vom Motorumgebungszustand-Bestimmungsmittel bestimmten Umgebungszustands.

7. Das Leerlaufstoppsystem nach Anspruch 1 oder 2, wobei die Motorsteuereinheit (4), vor dem Wiederanlassen des Motors (4), ein Wiederanlassmeldesignal an die Bremssteuereinheit (6) sowie ein Startabschlusssignal an die Bremssteuereinheit nach Abschluss des Wiederanlassens sendet; und wobei die Bremssteuereinheit (6) die minimale Grenzspannung (V0), die eine Bedingung zur Durchführung der Bremskrafthaltesteuerung in Bezug auf die Spannung (Av) ist, die zum Anlegen an den Aktuator (p, v1) in Bezug auf die Bremssteuereinheit (6) zugeführt wird, mit dem Verbrauchteelektrische-Energie-Minderungsmittel mindert, wenn das Wiederanlassmeldesignal empfangen wird, und die Steuerung zum Mindern der minimalen Grenzspannung (V0) des Verbrauchteelektrische-Energie-Minderungsmittels beendet, wenn das Startabschlusssignal empfangen wird.

8. Das Leerlaufstoppsystem nach Anspruch 1 oder 2, wobei die Bremssteuereinheit (6) die minimale Grenzspannung (V0), die die Bedingung zur Durchführung der Bremskrafthaltesteuerung in Bezug auf die Spannung (V0) ist, die zum Anlegen an den Aktuator (p, v1) in Bezug auf die Bremssteuereinheit (6) zugeführt wird, mit dem Verbrauchte-elektrische-Energie-Minderungsmittel (4E, 8, 9, 10, 11) mindert und gleichzeitig die Steuermodi, die durchgeführt werden können, begrenzt.

9. Das Leerlaufstoppsystem nach Anspruch 1, das ferner aufweist:
ein Motorumgebungszustand-Bestimmungsmittel (6) zum Bestimmen eines Umgebungszustands des Motors (4); und
ein Mäßigungsgrad-Änderungsmittel (6) zum Ändern der minimalen Grenzspannung auf der Basis des vom Motorumgebungszustand-Bestimmungsmittel bestimmten Umgebungszustands.

## Revendications

1. Système d'arrêt au ralenti pour arrêter et redémarrer un moteur (4) dans un état à l'arrêt d'un véhicule (1), comprenant :
une unité de commande de freinage (6) destinée à exécuter une commande de retenue de force de freinage pour retenir au moins temporairement une force de frein générée par l'opération d'une pédale à frein (p2) ; et
une unité de commande de moteur (4E) pour redémarrer le moteur qui s'arrête quand une condition de redémarrage prédéterminée est établie pendant l'opération de la pédale à frein ; **caractérisé par**
des moyens de réduction de consommation d'énergie électrique (4E, 8, 9, 10, 11) pour réduire la consommation d'énergie électrique d'une pièce à l'exception de l'unité de commande du moteur (4E) avant le redémarrage du moteur,
et pour réduire une tension de seuil minimum (V0) qui est une condition pour exécuter la commande de retenue de force de freinage concernant une tension (Av) qui est fournie pour être appliquée à un actionneur (p, v1) concernant l'unité de commande de freinage (6).

2. Système d'arrêt au ralenti selon la revendication 1, dans lequel les moyens de réduction de consommation d'énergie électrique arrêtent temporairement l'alimentation d'une énergie électrique ou d'un diagnostic pour au moins un des dispositifs de commande de véhicule (8, 9, 10, 11) autres que l'unité de commande de moteur (4E) et l'unité de commande de freinage (6).

3. Système d'arrêt au ralenti selon la revendication 1 ou 2, dans lequel l'unité de commande de moteur transmet un signal d'avertissement de redémarrage à l'unité de commande de freinage (6) et au dispositif de commande de véhicule avant le redémarrage du moteur ainsi qu'un signal d'achèvement de retour automatique à l'unité de commande de freinage et au dispositif de commande de véhicule après l'achèvement d'un retour automatique au redémarrage ; l'unité de commande de freinage (6) réduit la tension de seuil minimum (V0) qui est la condition pour exécuter la commande de retenue de force de freinage concernant la tension (Av) qui est fournie pour être appliquée à l'actionneur concernant l'unité de commande de freinage avec les moyens de réduction de consommation d'énergie électrique à la réception du signal d'avertissement de redémarrage ;
au moins un des dispositifs de commande de véhicule supprime la commande d'un actionneur ou d'un détecteur concernant au moins un des dispositifs de commande de véhicule à la réception du signal d'avertissement de redémarrage ; et
l'unité de commande de freinage (6) et le dispositif de commande de véhicule (8, 9, 10, 11) retournent à un mode de commande général à la réception du signal d'achèvement de retour automatique.

4. Système d'arrêt au ralenti selon la revendication 1 ou 2, dans lequel l'unité de commande de freinage (6) réduit la tension de seuil minimum (V0) qui est la condition pour exécuter la commande de retenue de force de freinage concernant la tension (Av) fournie pour être appliquée à l'actionneur concernant l'unité de commande de freinage (6) avec les moyens de réduction de consommation d'énergie électrique et restreint simultanément les modes de commande pouvant être effectués.

5. Système d'arrêt au ralenti selon la revendication 1 ou 2, comprenant en outre des moyens de surveillance de l'état d'alimentation en énergie électrique (4E) pour surveiller un état de tension d'une alimentation électrique du véhicule, dans lequel quand une possibilité que la retenue de la force de freinage par l'unité de commande de freinage (6) devienne impossible d'après l'état de tension est déterminée, l'arrêt et le redémarrage du moteur (4) est empêché.

6. Système d'arrêt au ralenti selon la revendication 2, comprenant en outre :
des moyens de détermination d'un état de circonférence d'un moteur (6) pour déterminer un état de circonférence du moteur (4) ; et
des moyens de changement de degré de réduction de la consommation d'énergie électrique (8) pour modifier le degré de réduction d'énergie électrique consommée des dispositifs de commande de véhicule (8, 9, 10, 11) sur la base de l'état de circonférence déterminé par les moyens de détermination de l'état de la circonférence du moteur.

7. Système d'arrêt au ralenti selon la revendication 1 ou 2, dans lequel l'unité de commande de moteur (4E) transmet, avant le redémarrage du moteur (4), un signal d'avertissement de redémarrage à l'unité de commande de freinage (6) ainsi qu'un signal d'achèvement de démarrage à l'unité de commande de freinage après l'achèvement du redémarrage ; et dans lequel l'unité de commande de freinage (6) réduit la tension de seuil minimum (V0) qui est la condition pour exécuter la commande de retenue de force de freinage concernant la tension (Av) qui est fournie pour être appliquée à l'actionneur (p, V1) concernant l'unité de commande de freinage (6) avec les moyens de réduction de consommation d'énergie électrique à la réception du signal d'avertissement de redémarrage et met fin à la commande de réduction de la tension de seuil minimum (V0) des moyens de réduction de consommation d'énergie électrique à la réception du signal d'achèvement de démarrage.

8. Système d'arrêt au ralenti selon la revendication 1 ou 2, dans lequel l'unité de commande de freinage (6) réduit la tension de seuil minimum (V0) qui est la condition pour exécuter la commande de retenue de force de freinage concernant la tension (V0) fournie pour être appliquée à l'actionneur (p, V1) concernant l'unité de commande de freinage (6) avec les moyens de réduction de consommation d'énergie électrique (4E, 8, 9, 10, 11) et restreint simultanément les modes de commandes pouvant être exécutés.

9. Système d'arrêt au ralenti selon la revendication 1, comprenant en outre :
des moyens de détermination d'état de circonférence de moteur (6) pour déterminer un état de circonférence du moteur (4) ; et
des moyens de changement de degré de modération (6) pour modifier la tension de seuil minimum sur la base de l'état de circonférence déterminé par les moyens de détermination d'état de circonférence.
